(19)

**Europäisches Patentamt**

**European Patent Office**

**Office européen des brevets**

(11) **EP 4 687 073 A1**

(12) **EUROPEAN PATENT APPLICATION**

(43) Date of publication:
04.02.2026 Bulletin 2026/06

(21) Application number: 25189658.5

(22) Date of filing: 15.07.2025

(51) International Patent Classification (IPC):
*G06N 3/0495* (2023.01)

(52) Cooperative Patent Classification (CPC):
**G06N 3/0495**; G06N 3/0464

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 30.07.2024 CN 202411036793

(71) Applicant: Harman International Industries, Inc.
Stamford, Connecticut 06901 (US)

(72) Inventors:
• **CHAO, Yu-Tin**
**Stamford, CT, 06901 (US)**
• **CHEN, Huaming**
**Stamford, CT, 06901 (US)**
• **YU, Hongwei**
**Stamford, CT, 06901 (US)**
• **CHEN, Qiang**
**Stamford, CT, 06901 (US)**
• **YAN, Zhouying**
**Stamford, CT, 06901 (US)**

(74) Representative: **Westphal, Mussgnug & Partner,**
**Patentanwälte mbB**
**Werinherstraße 79**
**81541 München (DE)**

(54) **MODEL OPTIMIZATION METHOD**

(57) The present disclosure provides a model optimization method capable of implementing cross-platform intelligent model deployment. A model optimization method executed on a first device may include: performing training using a first training dataset to obtain a first model; transforming the first training dataset with a 5 transformation function to obtain a transformed dataset, and generating a second training dataset based on the first training dataset and the transformed dataset; training the first model using the second training dataset to obtain an adjusted first model; performing performance tests on the first model and the adjusted first model using a test dataset to respectively obtain a first performance metric and a second performance metric, and calculating a performance metric difference between the first and second performance metrics; generating an adjusted second 10 training dataset based on the performance metric difference, which is configured to train the adjusted first model to obtain a second model; and performing dynamic quantization on the second model to obtain an optimized model deployable to a second device.

100

```
┌─────────────────────────────────────┐
│ Performing training on the first     │
│ device using a first training        │──── S102
│ dataset to obtain a first model      │
└─────────────────────────────────────┘
                 │
                 ▼
┌─────────────────────────────────────┐
│ Transforming the first training      │
│ dataset with a transformation        │
│ function to obtain a transformed     │──── S104
│ dataset, and generating a second     │
│ training dataset based on the first  │
│ training dataset and the transformed │
│ dataset                              │
└─────────────────────────────────────┘
                 │
                 ▼
┌─────────────────────────────────────┐
│ Training the first model on the      │
│ first device using the second        │──── S106
│ training dataset to obtain an        │
│ adjusted first model                 │
└─────────────────────────────────────┘
                 │
                 ▼
┌─────────────────────────────────────┐
│ Performing performance tests on the  │
│ first model and the adjusted first   │
│ model using a test dataset to        │──── S108
│ respectively obtain a first and a    │
│ second performance metric, and       │
│ calculating a performance metric     │
│ difference between the two           │
└─────────────────────────────────────┘
                 │
                 ▼
┌─────────────────────────────────────┐
│ Adjusting the second training        │
│ dataset based on the performance     │
│ metric difference to generate an     │──── S110
│ adjusted second training dataset,    │
│ which is configured to train the     │
│ adjusted first model to obtain a     │
│ second model                         │
└─────────────────────────────────────┘
                 │
                 ▼
┌─────────────────────────────────────┐
│ Performing dynamic quantization on   │
│ the second model on the first device │──── S112
│ to obtain an optimized model         │
│ deployable to the second device      │
└─────────────────────────────────────┘
```

**FIG. 1**

**Description**

**TECHNICAL FIELD**

The present disclosure relates to the field of artificial intelligence (AI), and more particularly, to a model optimization method, a computer-readable storage medium, and a computer program product.

**BACKGROUND**

With continuous advancements in artificial intelligence and machine learning, machine learning models such as deep learning neural networks have undergone large-scale development. For a machine learning model, completion of a training process typically does not signify an endpoint. How to deploy the trained machine learning model onto different terminals to realize its functionality is critically important, and this process may be referred to as model deployment. During model deployment, a series of issues need to be addressed, including the conversion from a training model to an inference model, hardware resource constraints on the model, the impact of metrics such as model inference latency, power consumption, and memory occupation on the entire system, as well as model security.

Current model deployment technologies often require manual adjustment and optimization of models, which is not only time-consuming but also error-prone. In cross-platform model deployment, due to significant differences in performance and resources among devices, traditional model deployment methods face numerous challenges. Therefore, there is an urgent need for a method capable of automating and simplifying the model deployment process to automatically optimize model performance according to the capabilities of different devices.

**SUMMARY OF THE INVENTION**

According to at least one aspect of the present disclosure, a model optimization method executed on a first device is provided, including: performing training on the first device using a first training dataset to obtain a first model; transforming the first training dataset with a transformation function to obtain a transformed dataset, and generating a second training dataset based on the first training dataset and the transformed dataset, where the transformation function represents a processing capability of a second device to which a model is to be deployed with respect to data in the first training dataset; training the first model on the first device using the second training dataset to obtain an adjusted first model; performing performance tests on the first model and the adjusted first model using a test dataset to respectively obtain a first performance metric of the first model and a second performance metric of the adjusted first model, and calculating a performance metric difference between the first performance metric and the second performance metric; adjusting the second training dataset based on the performance metric difference to generate an adjusted second training dataset, and training the adjusted first model using the adjusted second training dataset to obtain a second model; and performing dynamic quantization on the second model on the first device to obtain an optimized model deployable to the second device.

According to one or more embodiments of the present disclosure, the first device and the second device differ in at least one of storage resources, processing capabilities, and model runtime environments.

According to one or more embodiments of the present disclosure, where generating a second training dataset based on the first training dataset and the transformed dataset includes: selecting a portion of data from the transformed dataset to add to the first training dataset to generate the second training dataset, and where adjusting the second training dataset based on the performance metric difference to generate an adjusted second training dataset includes: increasing or decreasing a proportion of the portion of data in the transformed dataset based on the performance metric difference to generate the adjusted second training dataset.

According to one or more embodiments of the present disclosure, the first training dataset is an audio dataset, the second device is an audio processing device, and the transformation function is a frequency response curve of the second device with respect to audio data; or the first training dataset is an image dataset, the second device is an image processing device, and the transformation function is a processing function of the second device with respect to image data.

According to one or more embodiments of the present disclosure, where performing dynamic quantization on the second model on the first device to obtain an optimized model deployable to the second device includes: quantizing each of a plurality of layers of the second model to generate a plurality of quantized layers; calculating a difference between outputs of each of the plurality of layers and its corresponding quantized layer with respect to the same input to generate a set of output differences; and replacing at least a portion of the plurality of layers of the second model with quantized layers corresponding to the at least a portion of layers based at least on hardware resources of the second device and the output difference set to obtain the optimized model.

According to one or more embodiments of the present disclosure, replacing at least a portion of the plurality of layers of the second model with quantized layers corresponding to the at least a portion of layers based at least on hardware resources of the second device and the output difference set to obtain the optimized model includes: replacing, when hardware resources on the second device are insufficient for all layers of the second model, layers corresponding to small output differences in the set of output differences with corresponding quantized layers to obtain the optimized model.

According to one or more embodiments of the present disclosure, the model optimization method further includes: converting a model file of the second model or the optimized model into an operator list, where the model file includes a computation graph and a weight set, and the operator list includes an operator position matrix, an operator size matrix, an operator weight matrix, an operator bias matrix, and an operator scale matrix; and parsing the operator list in a traversal manner to extract a parameter set for each operator to generate a parameter list, where the parameter set includes a weight, a bias, and a scale of each parameter of the operator, and the parameter list is configured to be written into the second device to perform model computations.

According to one or more embodiments of the present disclosure, the model optimization method further includes: for two or more parameters in the parameter list that have the same size, calculating a similarity between the two or more parameters; when the similarity is greater than a predetermined threshold, retaining, in the parameter list, only a parameter value of one parameter among the two or more parameters and positions of parameters among the two or more parameters.

According to at least one other aspect of the present disclosure, a model optimization method executed on a second device is provided, including: deploying an optimized model on the second device, where the optimized model is obtained based on model optimization performed on a first device; acquiring system memory and a system processing capability of the second device in real time prior to invoking the optimized model; configuring layers and parameters of the optimized model based at least on the system memory and the system processing capability to generate an invoked model; and executing the invoked model by the second device.

According to one or more embodiments of the present disclosure, where configuring layers and parameters of the optimized model based at least on the system memory and the system processing capability to generate an invoked model includes: determining a baseline model of the optimized model and a set of base layers serving as supplements to the baseline model; calculating a count of configurable layers for each base layer based on the system memory, the system processing capability, and required memory and a required processing capability of each base layer in the set of base layers; determining a plurality of base layers in the set of base layers with the count of configurable layers greater than zero as a set of candidate layers; and selecting, based at least on the system memory and the system processing capability, one or more candidate layers from the set of candidate layers to supplement into the baseline model to generate the invoked model.

According to one or more embodiments of the present disclosure, where executing the invoked model by the second device includes: extracting a weight, a bias, and a scale of each parameter from the parameter list of the invoked model; and performing computations using the extracted weight, bias, and scale of each parameter, where the parameter list is generated by parsing an operator list converted from a model computation graph and a weight set.

According to at least one other aspect of the present disclosure, a computer-readable storage medium is provided, which has computer-readable instructions stored thereon, where the computer-readable instructions, when executed by a processor, cause the processor to execute the method according to any one of the preceding aspects.

According to at least one other aspect of the present disclosure, a computer program product is provided, which includes computer-readable instructions, where the computer-readable instructions, when executed by a processor, cause the processor to execute the method according to any one of the preceding aspects.

By utilizing the model optimization method, computer-readable storage medium, and computer program product according to the aforementioned aspects of the present disclosure, through a series of automated model optimization strategies including model weight adjustment, dynamic quantization, operator lists, parameter fusion, and resource assessment-based model optimization, the model deployment process is significantly optimized, and rapid and efficient model deployment can be achieved according to capabilities of target devices. Therefore, they are particularly suitable for cross-platform model deployment, and can ensure efficient and stable operation of the model across various devices and environments.

## DESCRIPTION OF THE DRAWINGS

The above and other objects, features and advantages of the embodiments of the present disclosure will become more apparent through a more detailed description of the embodiments of the present disclosure in conjunction with the accompanying drawings. The accompanying drawings are used to provide further understanding of the embodiments of the present disclosure and constitute a part of the specification. They are used to explain the present disclosure together with the embodiments of the present disclosure and do not constitute a limitation of the present disclosure. In the accompanying drawings, like reference numerals generally represent like components or steps.

FIG. 1 illustrates a flowchart of a model optimization method executed on a first device according to one or more embodiments of the present disclosure;

FIG. 2 illustrates a process flow of example model weight adjustment according to one or more embodiments of the present disclosure;

FIG. 3 illustrates a process flow of example dynamic quantization according to one or more embodiments of the present disclosure;

FIG. 4 illustrates a framework of a lightweight deployment method according to one or more embodiments of the present disclosure;

FIG. 5 illustrates an example operator list conversion process according to one or more embodiments of the present disclosure;

FIG. 6 illustrates a flowchart of example operator parsing according to one or more embodiments of the present disclosure;

FIG. 7 illustrates an example operator parsing format according to one or more embodiments of the present disclosure; and

FIG. 8 illustrates a flowchart of a model optimization method executed on a second device according to one or more embodiments of the present disclosure.

## DETAILED DESCRIPTION

The technical solutions in the embodiments of the present disclosure will be clearly and completely described below in conjunction with the accompanying drawings in the embodiments of the present disclosure. Obviously, the described embodiments are only some of the embodiments of the present disclosure, rather than all the embodiments. Based on the embodiments of the present disclosure, all other embodiments obtained by those of ordinary skill in the art without making creative effort shall fall within the scope of protection of the present disclosure.

As used in the embodiments of the present disclosure, unless otherwise indicated clearly in the context, the words "a," "an," "a kind of," and/or "the", and the like do not refer specifically to the singular, but may also include the plural. The words "first," "second," and the like used in the present disclosure do not indicate any order, quantity or importance, but are only used to distinguish different components. Similarly, the words "including," "comprising," and the like mean that the element or object preceding the words includes the elements or objects listed after the words and equivalents thereof, but do not exclude other elements or objects. The words "connected," "coupled," and the like are not limited to physical or mechanical connections, but may include electrical connections, whether direct or indirect.

In the embodiments of the present application, the term "module" or "unit" refers to a computer program or a segment of a computer program that has a predetermined function and works together with other related parts to achieve a predetermined goal, and can be implemented entirely or in part by using software, hardware (such as a processing circuit or memory) or a combination thereof. Likewise, one processor (or a plurality of processors or memories) can be used to implement one or more modules or units. Furthermore, each module or unit may be a part of an integral module or unit that includes the function of the module or unit.

Furthermore, flowcharts are used in the present disclosure to illustrate operations performed by a system according to embodiments of the present disclosure. It should be understood that the preceding or following operations are not necessarily performed precisely in sequence. Instead, various steps may be processed in a reverse order or concurrently. Meanwhile, it is also possible to add other operations to these processes or to remove a step or steps from these processes.

As used in the embodiments of the present disclosure, the term "model" generally refers to a machine learning model, including but not limited to neural network models, support vector machines, decision tree-based models, clustering models, etc., which are not specifically limited in the embodiments of the present disclosure. For example, widely used neural network models include Convolutional Neural Networks (CNN), Recurrent Neural Networks (RNN), Feedforward Neural Networks (FNN), Long Short-Term Memory Networks (LSTM), Generative Adversarial Networks (GAN), etc.

As used in the embodiments of the present disclosure, "model optimization" refers to various processing and adjustments performed on models during model deployment, including but not limited to model weight adjustment, model quantization, model compression, etc., which are not specifically limited in the embodiments of the present disclosure.

With the vigorous development of machine learning models such as deep learning neural networks, model optimization and efficient deployment have become increasingly critical. Current model deployment technologies are complex, time-consuming, and error-prone. Particularly in cross-platform model deployment, significant performance and resource disparities between different devices pose additional challenges. The present disclosure provides a cross-platform intelligent model deployment method. Through a series of automated model optimization strategies including model weight adjustment, dynamic quantization, operator lists, parameter fusion, and resource assessment-based model optimization, the model deployment process is significantly optimized, and rapid and efficient model deployment can be achieved according to capabilities of target devices.

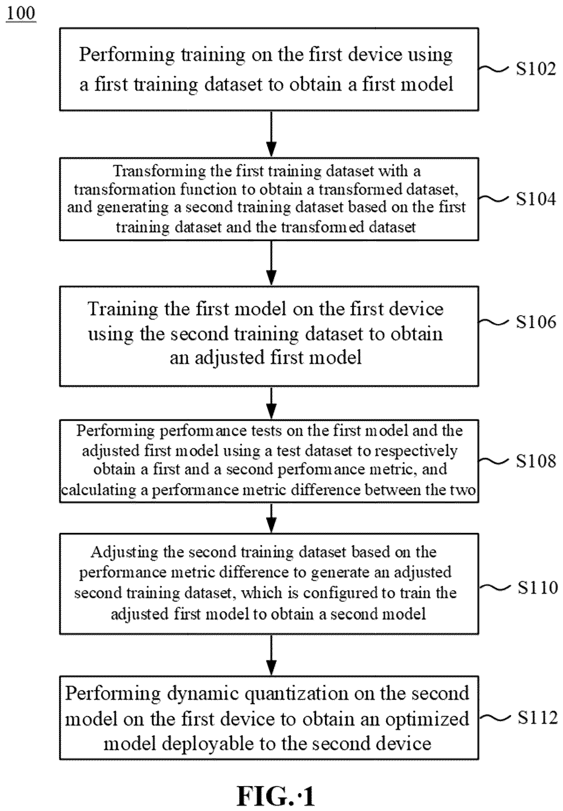

A model optimization method executed on a first device according to one or more embodiments of the present disclosure will now be described with reference to FIG. 1. FIG. 1 illustrates a flowchart of a model optimization method 100 executed on a first device according to one or more embodiments of the present disclosure. Here, the first device may refer to any computing device, including but not limited to a computer (e.g., a personal computer, a mainframe computer, a supercomputer, etc.), a server (e.g., a standalone server, a server cluster, etc.), a workstation, etc., which are not specifically limited in the embodiments of the present disclosure.

As shown in FIG. 1, in step S102, training is performed on the first device using a first training dataset to obtain a first model. Here, the first training dataset may be, for example, an audio dataset, an image dataset, an audio-video dataset, etc., and correspondingly, the first model may be an audio processing model, an image processing model, an audio-video processing model, etc., which are not specifically limited in the embodiments of the present disclosure. For example, when the first training dataset is an audio dataset, the first model may be an audio enhancement model such as a noise reduction model, a speech recognition model, a speech synthesis model, etc.; when the first training dataset is an image dataset, the first model may be an object detection model, an image classification model, a semantic segmentation model, etc.

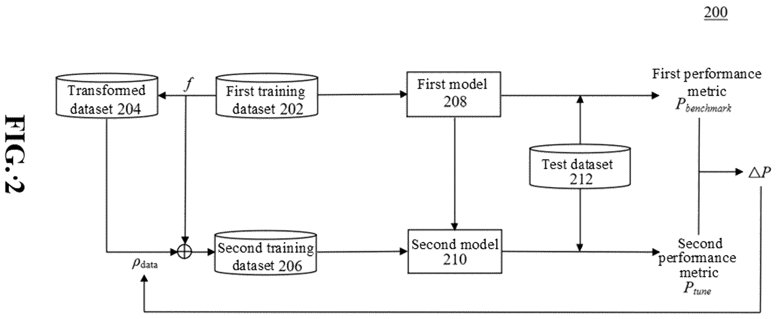

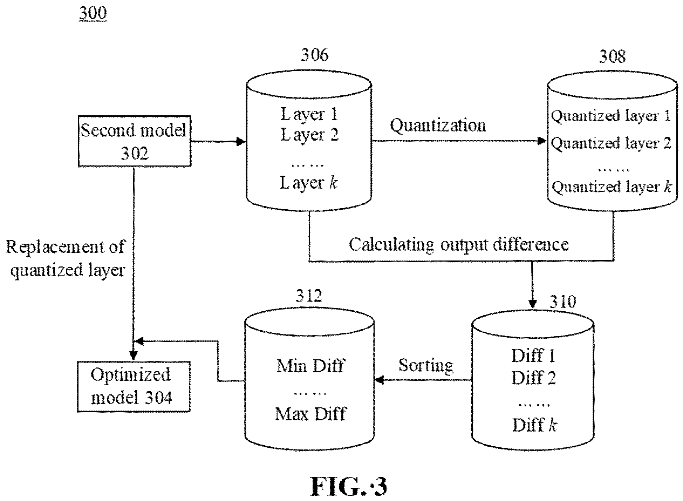

After training the first model, steps S104 to S112 may be used to optimize the first model. Steps S104 to S112 will be described below with reference to FIGS. 2 and 3, where FIG. 2 illustrates a process flow 200 of example model weight adjustment according to one or more embodiments of the present disclosure, and FIG. 3 illustrates a process flow 300 of example dynamic quantization according to one or more embodiments of the present disclosure.

Due to differences in storage resources, processing capabilities, model runtime environments, etc., between the first device and the second device where models are to be deployed, to better facilitate model deployment, the model optimization method 100 of the present disclosure introduces a transformation function f to measure processing capabilities of the second device for data in the first training dataset or similar data. As an example rather than a limitation, when the first training dataset is an audio dataset and the second device is an audio processing device, the transformation function may be a frequency response curve of the second device with respect to audio data; or when the first training dataset is an image dataset and the second device is an image processing device, the transformation function may be a processing function of the second device with respect to image data, such as an image enhancement transfer function.

Referring to FIG. 2, in step S104, the first training dataset 202 is transformed using the transformation function $f$ to obtain a transformed dataset 204, and consequently, a second training dataset 206 may be generated based on the first training dataset and the transformed dataset. Specifically, a portion of data $\rho_{data}$ may be selected from the transformed dataset 204 to add to the first training dataset 202 to generate the second training dataset 206. The second training dataset may be used in step S106 to further train the first model 208, for example by applying quantization-aware training to adjust weights of the first model. Since the second training dataset includes transformed data that accounts for data processing performance of the second device, this training process can reduce model performance degradation caused by reduced processing capabilities of the second device. To distinguish from the ultimately trained second model 210, the trained intermediate model obtained in step S106 is referred to as an adjusted first model (or a second model under training), while in FIG. 2 it is uniformly denoted as the second model 210 for explanatory convenience.

In step S108, performance tests are performed on the first model and the adjusted first model using a test dataset to respectively obtain a first performance metric of the first model and a second performance metric of the adjusted first model. As shown in FIG. 2, the same test dataset 212 is used to test the performance of the first model 208 and the second model under training 210 to respectively obtain a first performance metric $P_{benchmark}$ and a second performance metric $P_{tune}$, and a difference $\triangle P$ between the two performance metrics is calculated.

During the process of performing optimization training on the first model to obtain the second model, an objective is to maximize the proportion of transformed data included in the second training dataset while keeping the performance metric difference $\triangle P$ between the two models as small as possible or within an acceptable range. To this end, in step S110, the second training dataset may be adjusted based on the performance metric difference to generate an adjusted second training dataset, for example by increasing or decreasing the proportion of a portion of transformed data added to the first training dataset, and continuing training of the adjusted first model using the adjusted second training dataset. For example, when the performance metric difference is small, the proportion of the portion of the transformed data added to the first training dataset may be further increased; when the performance metric difference exceeds an acceptable range, the proportion of the portion of the transformed data added to the first training dataset may be decreased.

The above adjustment and training processes are repeated, during which quantization-aware training may be applied to adjust weights of the first model until convergence conditions are met to obtain the final second model. By introducing the transformation function of the second device to generate the second training dataset for optimization training and continuously adjusting the proportion of the transformed data based on the performance metric difference, the optimized second model obtained through this approach can maximally reduce performance degradation when the model is deployed to the second device.

In step S112, dynamic quantization may be further performed on the second model to obtain an optimized model deployable to the second device. Quantization is widely applied in neural network model deployment as a model compression technique that converts floating-point storage (operations) to integer storage (operations). It can significantly reduce the size of the model and improve the runtime speed of the model, thereby meeting application requirements of embedded terminals such as audio devices and smartphones.

In one or more embodiments of the present disclosure, further dynamic quantization may be performed on the second model. Referring to FIG. 3, the second model 302 may correspond to the trained second model 210 shown in FIG. 2. Each of a plurality of layers 306 (schematically shown as Layer 1 to Layer $k$ in the figure, where $k$ is a positive integer greater than 1) of the second model may be quantized to generate a plurality of quantized layers 308. A difference between outputs of each of the plurality of layers 306 and its corresponding quantized layer 308 with respect to the same input is then calculated to obtain a set of output differences 310 (schematically shown as Diff 1 to Diff $k$ in the figure). The output difference values in the set of output differences 310 may be sorted in ascending or descending order to obtain, for example, an ordered set of output differences 312 shown in FIG. 3 (schematically shown as Min Diff to Max Diff in the figure).

During dynamic quantization, at least a portion of the plurality of layers 306 of the second model 302 may be replaced with corresponding quantized layers based on hardware resources of the second device and the set of output differences 310, thereby obtaining the optimized model 304. Specifically, hardware resources of the second device, such as storage resources and processing capabilities, may be acquired. If the hardware resources of the second device are insufficient for all layers 306 of the second model, layers corresponding to small output differences may be replaced with corresponding quantized layers first in their order in the ordered set of output differences 312 to minimize model performance degradation caused by quantization. The count of layers to be replaced depends on the hardware resource status of the second device. In some cases, if the second device has severely limited hardware resources, all layers of the second model may be replaced with corresponding quantized layers to maximally compress the size of the second model. In some cases, if the second device has sufficient hardware resources, fewer layers may be replaced or no replacement of quantized layers may be performed to maintain optimal model performance. In some cases, if the second device has critically insufficient hardware resources, the second model may be retrained to reduce model size while improving model performance and accuracy.

After obtaining the optimized model, a lightweight model deployment method is further proposed in the present disclosure to further enhance model deployment efficiency. Machine learning models typically use computation graphs as universal data structures for understanding, expressing, and executing the machine learning models, which consist of fundamental data structures (tensors) and basic computational units (operators). In a computation graph, nodes are typically used to represent operators, directed edges between nodes represent tensor states, and dependencies between operators are also described. As used in the embodiments of the present disclosure, an operator represents a computational unit of the model, where any operation performed on any function may be referred to as an operator. For example, in a neural network model, an operator may correspond to the computational logic of each layer. For example, the convolution algorithm in a convolutional layer can be called an operator, and the weighted summation operation in a fully connected layer may also be termed an operator. The specific structure and form of operators are not limited in the embodiments of this disclosure. As models grow in scale, the structure of computation graphs becomes increasingly complex. The core idea of the lightweight model deployment method proposed in this disclosure is to convert the bulky computation graph and weight collection files of conventional model files into a lightweight operator list. The operator list may include an operator position matrix, an operator size matrix, an operator weight matrix, an operator bias matrix, and an operator scale matrix. Compared to a computation graph, the operator list occupies significantly less memory, thereby reducing model deployment requirements and complexity, and enabling rapid and efficient lightweight deployment.

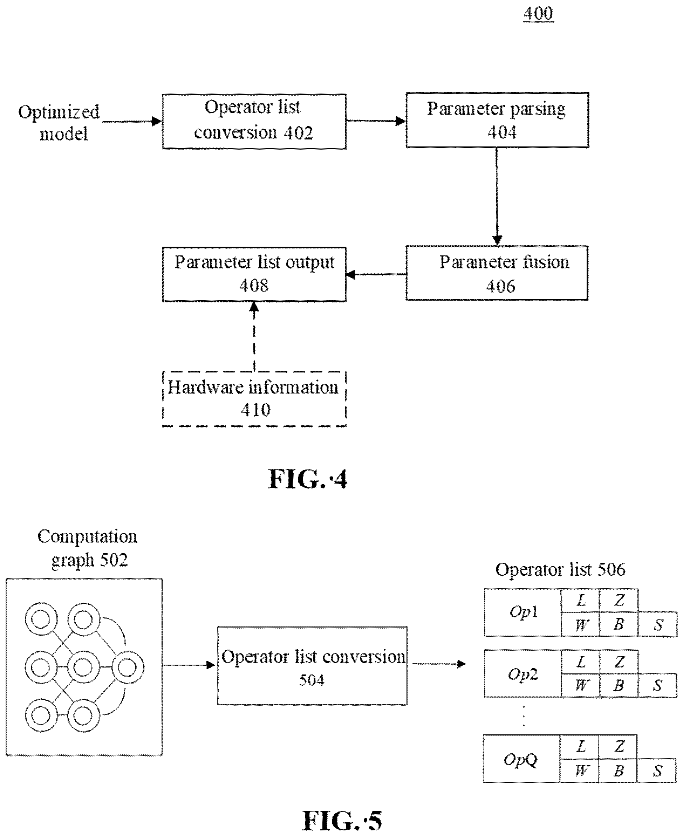

The framework of the lightweight deployment method of the present disclosure may be represented by FIG. 4, which illustrates a framework 400 of the lightweight deployment method according to one or more embodiments of the present disclosure.

As shown in FIG. 4, for an optimized model or a second model obtained through weight adjustment and dynamic quantization (schematically shown as the optimized model in FIG. 4), a computation graph and a weight set of the model may be converted into an operator list through operator list conversion 402 by, for example, the first device, weights, biases, and scales of parameters of operators are extracted from the operator list through parameter parsing 404 to generate a parameter list, the size of the parameter list is further reduced through parameter fusion 406, and the parameter list is output (408). In one or more embodiments, when outputting the parameter list, hardware information 410 of the second device (shown in dashed lines in FIG. 4) may also be referenced. For example, when hardware resources of the second device are insufficient, preliminary screening may be performed during output of the parameter list to remove some non-essential operator parameters.

Specifically, in the operator list conversion 402, position information, size information, weight information, and bias information of different types of operators may be extracted from the computation graph of the model to generate the operator list. The model may include various types of operators, for example, convolution operators, weighting operators, summation operators, etc., where each type may also include a plurality of operators. Assuming that the optimized model in the present disclosure includes M types of operators, for the j-th type of operator, $L_j$ may be used to represent a position matrix of this type of operator in the model:

$$L_j = [l_1, l_2 \ldots l_N] \quad (1)$$

where $N$ represents the total count of the $j$-th type of operators in the model, $N$ being a positive integer greater than or equal to 1; $1 \leq j \leq M$, M represents the total count of operator types in the model, and $M$ is a positive integer greater than or equal to 1.

For each operator, there are corresponding input data $X$ and output data $Y$, and the relationship between the input and output data satisfies:

$$Y = F(X) \quad (2)$$

where F represents a mapping matrix.

Generally, the input data X, the output data $Y$, and the mapping matrix F may all have three-dimensional parameters, namely scale, bias, and weight. For this, the following matrix may be used to represent the size matrix of each operator:

$$z_i = \begin{bmatrix} z_{i\_x\_scale} & z_{i\_x\_bias} & z_{i\_x\_weight} \\ z_{i\_f\_scale} & z_{i\_f\_bias} & z_{i\_f\_weight} \\ z_{i\_y\_scale} & z_{i\_y\_bias} & z_{i\_y\_weight} \end{bmatrix} \quad (3)$$

where $z_i$ represents the size matrix corresponding to the i-th operator, with $1 \leq i \leq N$ for the j-th type of operator; $z_{i\_x\_scale}$, $z_{i\_x\_bias}$, and $z_{i\_x\_weight}$ respectively represent sizes of the scale, the bias, and the weights of the input data; $z_{i\_f\_scale}$, $z_{i\_f\_bias}$, and $z_{i\_f\_weight}$ respectively represent sizes of the scale, the bias, and the weights of the mapping matrix; and $z_{i\_y\_scale}$, $z_{i\_f\_bias}$, and $z_{i\_y\text{-}weight}$ respectively represent sizes of the scale, the bias, and the weights of the output data.

The size matrix $Z_j$ of the j-th type of operator in the model may be represented as:

$$Z_j = [z_1, z_2 \ldots z_N] \quad (4)$$

Correspondingly, the weight matrix $W_j$, the bias matrix $B_j$, and the scale matrix of the j-th type of operator in the model may be respectively represented as:

$$W_j = [w_1, w_2 \ldots w_N] \quad (5)$$

$$B_j = [b_1, b_2 \ldots b_N] \quad (6)$$

$$S_j = [s_1, s_2 \ldots s_N] \quad (7)$$

During the operator list conversion 402 process, by traversing the computation graph of the model, the following operator list matrix **OpList** may be obtained:

$$OpList = \begin{bmatrix} L_1 & Z_1 W_1 & B_1 S_1 \\ \ldots & \ldots \ldots & \ldots \ldots \\ L_j & Z_j W_j & B_j S_j \\ \ldots & \ldots \ldots & \ldots \ldots \\ L_M & Z_M W_M & B_M S_M \end{bmatrix} \quad (8)$$

where M represents the total count of operator types in the model; each row in the operator list matrix **OpList** represents the position matrix, the size matrix, the weight matrix, the bias matrix, and the scale matrix of the corresponding type of operator. For example, $L_j$, $Z_j$, $W_j$, $B_j$, and $S_j$ respectively represent the position matrix, the size matrix, the weight matrix, the bias matrix, and the scale matrix of the $j$-th type of operator, with $1 \leq j \leq M$. Each type of operator may include a plurality of operators. For example, the j-th type of operator may include $N$ operators.

The aforementioned operator list conversion process may be represented as FIG. 5, where $Op$ denotes an operator, $Q$ denotes the total count of operators in the operator list, and L, Z, W, B, and S respectively denote the position matrix, the size matrix, the weight matrix, the bias matrix, and the scale matrix of each operator. In FIG. 5, the computation graph 502 of the model is converted into the operator list 506 through operator list conversion 504. As an example rather than a limitation, assuming that the model contains a total of $M$ types of operators with each type including $N$ operators, then $Q = M \times N$. It can be understood that in practical applications, the count of operators per type in the model may be identical or different, which is not specifically limited in the embodiments of the present disclosure. In one or more embodiments of the present disclosure, data in the operator list may be stored using queue data structures, such as First-In-First-Out (FIFO) structures, while the data storage structures are not specifically limited in the embodiments of the present disclosure.

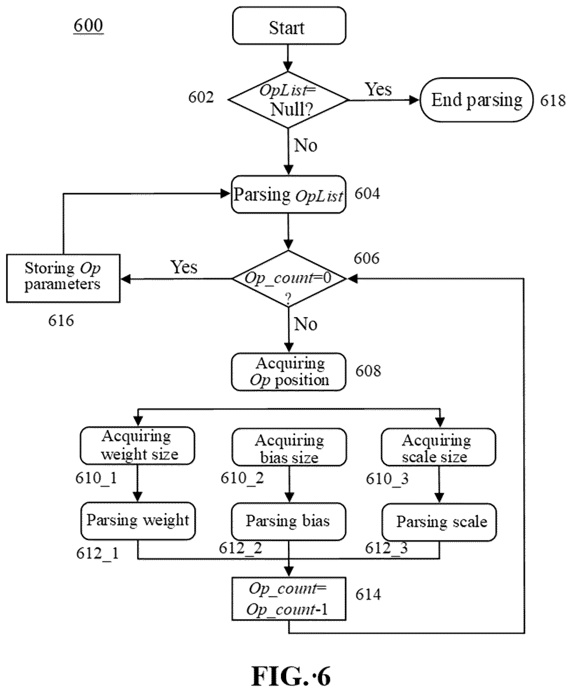

Returning to FIG. 4, during operator parsing 404, the operator list is parsed in a traversal manner to extract a parameter set of each operator to generate a parameter list. The parameter set of each operator includes the weight, the bias, and the scale of each parameter of the operator. The process of operator parsing may be represented as FIG. 6, which illustrates a flowchart 600 of example operator parsing according to one or more embodiments of the present disclosure.

As shown in FIG. 6, in step 602, it is first determined whether the current operator list *OpList* is empty, if not, then the process proceeds to step 604 to parse the current operator type in the operator list, such as the j-th type of operator; otherwise, operator parsing is terminated (618).

In step 606, it is determined whether the count of operators *Op_count* of the current operator type in the operator list equals zero. At the start of parsing, *Op_count* equals the total count of operators of the current type. For example, for the *j*-th type of operator including $N$ operators, the initial value of *Op_count* may equal $N$. When the count of operators is not equal to zero, the process proceeds to step 608 to continue parsing. For example, the first operator $Op_{j1}$ in the current operator type may be parsed. In step 608, the position index of $Op_{j1}$ may be acquired from the position matrix of this operator type included in the operator list. In steps 610_1, 610_2, and 610_3, the weight size, the bias size, and the scale size of each parameter of Op1 may be respectively acquired from the size matrix of this operator type based on the position index. Subsequently, in steps 612_1, 612_2, and 612_3, the weight, the bias, and the scale of each parameter of $Op_{j1}$ may be respectively acquired from the weight matrix, the bias matrix, and the scale matrix of this operator type based on the position index.

After completing parsing of all parameters for the operator $Op_{j1}$, the count of operators Op_count is decremented by one in step 614. For example, if the j-th type includes $N$ operators, the initial value of Op_count may equal $N$. After completing parsing of all parameters for the first operator $Op_{j1}$, Op_count is set to be equal to N-1. This process is repeated until all operators of the current operator type are parsed, i.e., Op_count equals zero. At this point, if the determination result in step 606 is yes, the process may proceed to step 616 to store parameters of the current operator type and continue parsing the next operator type starting from step 604.

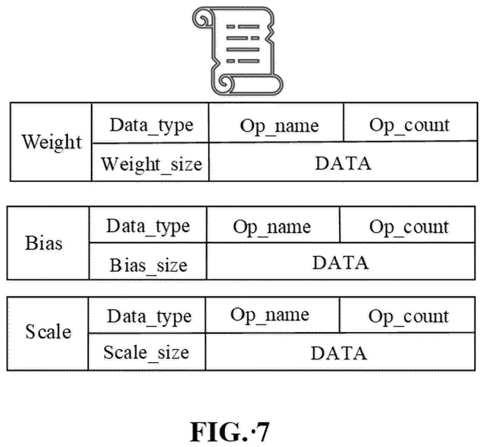

During operator parsing, the parsing format shown in FIG. 7 may be adopted, where for each of the weight, the bias, and the scale of each parameter, its data type Data_type (e.g., floating-point number, integer, etc.), the operator name Op_name (e.g., convolution operator, weighting operator, etc.) corresponding to the parameter, and the count of operators Op_count, the parameter sizes (e.g., the weight size Weight_size, the bias size Bias_size, the scale size Scale_size) corresponding to the parameter, and parameter values DATA (e.g., the weight value, the bias value, and the scale value) are respectively parsed and stored.

Returning to FIG. 4, the lightweight deployment method proposed in the present disclosure may further include parameter fusion 406 to further reduce the memory occupation of the parameter list. Specifically, for any two or more parameters in the parameter list, for example, any two or more weights, biases, or scales, etc., it can be determined whether their sizes are the same. If the sizes are the same, the similarity between these parameters may be further determined. For example, their cosine similarity may be calculated. When the cosine similarity between these parameters is greater than a predetermined threshold, only one of the parameter values along with the position indices of the parameters may be retained in the parameter list. This process may be referred to as parameter fusion. Here, the predetermined threshold may be determined based on practical requirements, for example, 0.9, which is not specifically limited in the embodiments of the present disclosure. For example, if the cosine similarity between two weights is determined to be greater than the predetermined threshold, only one of the weight values along with the position indices of the two weights may be retained in the parameter list. In this manner, similar or redundant parameters may be merged to reduce redundancy and compress the size of the parameter list, thereby further lowering the complexity of model deployment and improving model deployment and runtime efficiency.

The parameter list generated through operator parsing and operator fusion may be written into the second device during model deployment for invocation by the second device when executing the model. In one or more embodiments of the present disclosure, when deploying the optimized model (or, in some embodiments, the second model) obtained through model weight adjustment and dynamic quantization, only the parameter list parsed from the optimized model may be deployed to the second device. When invoking the optimized model, the second device may extract the weight, the bias, and the scale of each parameter of each operator from the parameter list and use the extracted weight, bias, and scale of each parameter of each operator for model computations.

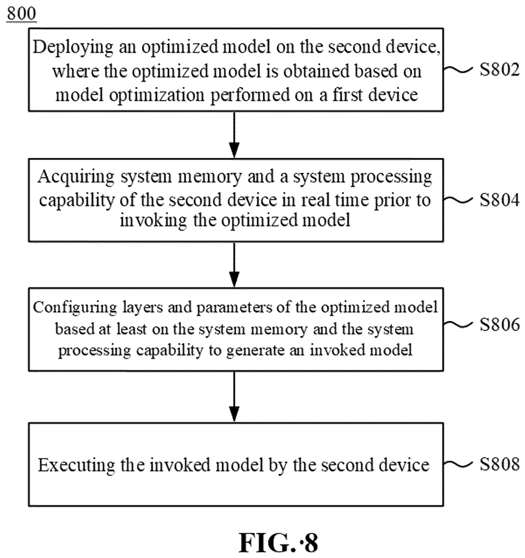

After the optimized model is deployed to the second device and before the second device invokes the optimized model, further optimizations may be performed on the optimized model based on the hardware resources of the second device. FIG. 8 illustrates a flowchart of a model optimization method 800 executed on a second device according to one or more embodiments of the present disclosure. Here, the second device refers to a device to which the model is to be deployed. For example, it may be an audio processing device such as headphones, a speaker, etc., an image processing device such as a camera, a smartphone, a desktop computer, a laptop computer, a tablet, a wearable device, a smart home device, and so on, which is not specifically limited in the embodiments of the present disclosure.

As shown in FIG. 8, in step S802, an optimization model is deployed on the second device, where the optimized model may be obtained through the model optimization method 100 executed on the first device as described above with reference to FIG. 1. As described above, the first device may refer to any computing device, including but not limited to a computer (e.g., a personal computer, a mainframe computer, a supercomputer, etc.), a server (e.g., a standalone server, a server cluster, etc.), a workstation, etc.

In step S804, system memory and a system processing capability of the second device may be acquired in real time prior to invoking the optimized model. For example, the system memory may be represented in bytes, kilobytes (KB), megabytes (MB), gigabytes (GB), etc., and the system processing capability may be represented in millions of instructions per second (MIPS). Other forms may also be used to represent sizes of the system memory and the system processing capability, which is not specifically limited in the embodiments of the present disclosure

Subsequently, in step S806, the layers and parameters of the optimized model may be configured based on the system memory and the system processing capability of the second device that are acquired in real time, so as to generate a model (referred to here as the invoked model) that is ultimately invoked and executed by the second device. In one or more embodiments, in a case where the system memory and the system processing capability of the second device are limited, non-essential parameters and layers in the model may be automatically reduced to decrease the size of the model and improve the runtime efficiency of the model. In one or more embodiments, in a case where the system memory and the system processing capability of the second device are sufficient, the number of layers and complexity of the model may be increased to enhance the processing capability and accuracy of the model.

Specifically, a baseline model of the optimized model and a set of base layers serving as supplements to the baseline model may be determined. Here, the baseline model is a simplified, easily implementable model having the basic functionality of the model, typically used for performance comparison with more complex models; and the base layers refer to more sophisticated network layers (e.g., CNN layers, RNN layers, U-Net layers, etc.) that may be added to the baseline model as supplements. Assume that there are T distinct types of base layers in the optimized model, then the set **H** of these T types of base layers may be expressed as:

$$H = [H_1, H_2 \ldots H_T] \qquad (9)$$

The count of configurable layers for each type of base layer may be calculated based on the system memory and the system processing capability of the second device and the required memory and processing capability of each base layer. When calculating the count of configurable layers, system redundancy, i.e., the required memory and processing capability for system processing, including the operation of the baseline model, needs to be taken into account to ensure system stability. Assuming that the system memory of the second device acquired in real time is $C_{system}$, the system processing capability is $R_{system}$, the redundant memory is $\delta_C$, and the redundant processing capability is $\delta_R$, then the count of layers that can be allocated to the t-th type of base layer can be expressed as:

$$Count_t = \max\left(\min\left(\left\lfloor \frac{C_{system}-\delta_C}{c_{peak}} \right\rfloor, \left\lfloor \frac{R_{system}-\delta_R}{r_{peak}} \right\rfloor\right), 0\right) \qquad (10)$$

where $c_{peak}$ and $r_{peak}$ respectively represent the required maximum memory and maximum system processing capability of each base layer of the t-th type; and $1 \leq t \leq T$.

The count of allocatable layers is calculated for each type of base layer in the set of base layers **H**. Additionally, base layer types with the count of allocatable layers greater than zero are classified into a set of candidate layers $H_{opt}$:

$$h_t \in H_{opt} | Count_t > 0 \qquad (11)$$

Subsequently, base layers may be selected from this set of candidate layers to configure the baseline model. This base layer selection process can be described by the following state transition equations:

$$f(k, C_k, R_k) = \begin{cases} f(k-1, C_{k-1}, R_{k-1}) \\ \quad if\ C_k > C_{system} - \delta_C || R_k > R_{system} - \delta_R \\ max\big(f(k-1, C_{k-1}, R_{k-1}), f(k, C_{k-1} + c_k, R_{k-1} + r_k)\big) \\ \quad if\ C_k \leq C_{system} - \delta_C\ and\ R_k \leq R_{system} - \delta_R \end{cases} \qquad (12)$$

where $k$ denotes the $k$-th base layer selected from the set of candidate layers; $f(k, C_k, R_k)$ represents the resource occupancy state after the $k$-th base layer selection, which, for example, may indicate the proportions of total memory and the total processing capability of the model relative to the system memory and the system processing capability after the k-th base layer selection; $C_k$ denotes the cumulative memory up to the $k$-th base layer selection; $R_k$ denotes the cumulative processing capability after the k-th base layer selection; and $c_k$ and $r_k$ represent the required memory and processing capability of the k-th selected base layer.

The aforementioned state transition equation may indicate that if the cumulative memory after selecting the k-th base layer is greater than the system available memory (i.e., $C_{system}$ - $\delta_C$) or the cumulative processing capability is greater than the system available processing capability (i.e., $R_{system}$ - $\delta_R$), the currently selected $k$-th base layer is not added to the baseline model, and the resource occupancy state of the model remains at the resource occupancy state after the $k$-1-th base layer selection. Conversely, if the cumulative memory is less than the system available memory and the cumulative processing capability is less than the system available processing capability after the $k$-th base layer is selected, the currently selected $k$-th base layer may be added to the baseline model and the resource occupancy state is updated to a greater value of the resource occupancy state after the $k$-1-th base layer selection and the resource occupancy state after the $k$-th base layer selection. By leveraging this state transition equation for base layer selection, an appropriate number of base layers can be selected to add to the baseline model to enhance the performance of the model while ensuring system stability.

In Step S808, the second device may execute the generated invoked model for computation. With the model optimization method 800 executed on the second device, the model may be automatically optimized through real-time monitoring and evaluation of the system memory and the system processing capability of the second device in combination with the required memory and computation capability of each base layer, thereby maximizing the utilization of system resources to ensure optimal model performance under specific resource environments. Throughout the entire process of the model optimization method, system resources may be continuously monitored and evaluated to provide feedback and guidance, thereby ensuring optimal decision-making during model configuration and optimization processes.

During the process of invoking and executing the model by the second device, measures such as Single Instruction Multiple Data (SIMD) instruction optimization, memory scheduling and address access optimization, model loading and parallel computation designs, and data structure and storage optimization can be employed to further improve model operation efficiency, reduce model overhead, and enhance overall system performance. In one or more examples, the efficiency of convolution operations can be improved through SIMD instruction set optimization, which can optimize pointwise convolution computations into block-based computations, thereby fully leveraging the parallel architecture and SIMD functions of the system hardware and improving overall computation efficiency. In one or more embodiments, memory management can be optimized during model operations, for example, by intelligently predicting data access patterns or reordering convolution data, to further boost processing efficiency. In one or more examples, reasonable model loading strategies and parallel computation structures can be adopted to maximize the performance of modern multi-core processors. In one or more examples, data processing and conversion may be optimized through sparse matrices to enhance information storage effectiveness, thereby saving memory and reducing computational workload.

The cross-platform model optimization and deployment method according to embodiments of the present disclosure is described with reference to FIGS. 1 to 8. Through a series of automated model optimization strategies including model weight adjustment, dynamic quantization, operator lists, parameter fusion, and resource assessment-based model optimization, the model deployment process is significantly optimized, and rapid and efficient model deployment can be achieved according to capabilities of target devices. The cross-platform model optimization and deployment method according to embodiments of the present disclosure is applicable to diverse devices and application platforms, and can ensure efficient and stable operation of models across various devices and environments.

The embodiments of the present disclosure may also be implemented as a computer-readable storage medium. The computer-readable storage medium according to the embodiments of the present disclosure has computer-readable instructions stored thereon. When the computer-readable instructions are executed by a processor, the model optimization method according to various embodiments of the present disclosure, as described with reference to the aforementioned figures, can be performed. The computer-readable storage medium includes, but is not limited to, for example, a volatile memory and/or nonvolatile memory. The volatile memory may include, for example, a random access memory (RAM) and/or a cache memory (cache), and the like. The non-volatile memory may include, for example, a read-only memory (ROM), a hard disk, a flash memory, and the like.

**EP 4 687 073 A1**

According to an embodiment of the present disclosure, a computer program product or a computer program is further provided. The computer program product or the computer program includes computer-readable instructions, and the computer-readable instructions are stored in a computer-readable storage medium. The processor of the computer device can read the computer-readable instructions from the computer-readable storage medium, and the processor executes the computer-readable instructions to cause the computer device to perform the model optimization method described in the above embodiments.

The program portion of the technology may be considered as a "product" or "artifact" existing in the form of executable codes and/or associated data, which is engaged or implemented through a computer-readable medium. A tangible, permanent storage medium may include the memory or storage used in any computer, processor, or similar device or related module. For example, various semiconductor memories, tape drives, disk drives, or any similar devices capable of providing storage functions for software.

All of the software or portions thereof may from time to time communicate over a network, such as the Internet or other communications networks. Such communication may load software from one computer device or processor to another. For example, loading from one server or host of the device to one hardware platform of a computer environment, or another computer environment implementing the system, or a system of similar functionality related to providing required information. Therefore, another medium capable of transferring software elements may also be used as a physical connection between local devices, such as light wave, radio wave, electromagnetic wave, etc., which are propagated through cables, optical cables, or air. The physical medium used to carry waves, such as cables, wireless links, optical cables and the like devices, may also be considered a medium for carrying the software. As used herein, unless restricted to tangible "storage" media, other terms referring to computer or machine "readable media" refer to media that participate in the process of a processor executing any instructions.

The present application uses specific words to describe embodiments of the present application. For example, "first/second embodiment", "an embodiment", and/or "some embodiments" means a feature, structure, or characteristic associated with at least one embodiment of the present application. Accordingly, it should be emphasized and noted that "an embodiment" or " one embodiment" or "an alternative embodiment" referred to two or more times in different places in this specification does not necessarily refer to the same embodiment. In addition, certain features, structures, or characteristics of one or more embodiments of the present application may be combined as appropriate.

In addition, it can be understood by those skilled in the art that aspects of the present application may be illustrated and described by a number of patentable categories or circumstances, including any new and useful process, machine, product, or combination of substances, or any new and useful improvement thereof. Accordingly, aspects of the present application may be performed entirely by hardware, may be performed entirely by software (including firmware, resident software, microcode, or the like), or may be performed by a combination of hardware and software. All of the above hardware or software may be referred to as "data blocks", "modules", "engines", "units", "components" or "systems". Additionally, aspects of the present application may be manifested as a computer product disposed in one or more computer-readable media, the product including computer-readable program code.

Unless otherwise defined, all terms used herein, including technical and scientific terms, have the same meaning as commonly understood by those of ordinary skill in the art to which the present invention belongs. It should also be understood that terms such as those defined in common dictionaries should be construed as having a meaning consistent with their meaning in the context of the relevant technology and should not be construed with idealized or extremely formalized meanings unless expressly defined as such herein.

The foregoing is a description of the present invention and should not be considered a limitation thereof. Although several exemplary embodiments of the present invention are described, it will be readily understood by those skilled in the art that many modifications can be made to the exemplary embodiments without departing from the novel teachings and advantages of the present invention. Accordingly, all such modifications are intended to be encompassed within the scope of the present invention as defined by the claims. It should be understood that the foregoing is a description of the present invention and should not be considered to be limited to the particular embodiments as disclosed, and that modifications to the disclosed embodiments, as well as other embodiments, are intended to be included within the scope of the appended claims. The present invention is defined by the claims and equivalents thereof.

**Claims**

1.    A model optimization method executed on a first device, comprising:

    performing training on the first device using a first training dataset to obtain a first model;
    transforming the first training dataset with a transformation function to obtain a transformed dataset, and generating a second training dataset based on the first training dataset and the transformed dataset, wherein the transformation function represents a processing capability of a second device to which a model is to be deployed with respect to data in the first training dataset;

training the first model on the first device using the second training dataset to obtain an adjusted first model;

performing performance tests on the first model and the adjusted first model using a test dataset to respectively obtain a first performance metric of the first model and a second performance metric of the adjusted first model, and calculating a performance metric difference between the first performance metric and the second performance metric;

adjusting the second training dataset based on the performance metric difference to generate an adjusted second training dataset, and training the adjusted first model using the adjusted second training dataset to obtain a second model; and

performing dynamic quantization on the second model on the first device to obtain an optimized model deployable to the second device.

2. The method according to claim 1, wherein generating a second training dataset based on the first training dataset and the transformed dataset comprises:

selecting a portion of data from the transformed dataset to add to the first training dataset to generate the second training dataset, and

wherein adjusting the second training dataset based on the performance metric difference to generate an adjusted second training dataset comprises:

increasing or decreasing a proportion of the portion of data in the transformed dataset based on the performance metric difference to generate the adjusted second training dataset.

3. The method according to claim 1, wherein

the first training dataset is an audio dataset, the second device is an audio processing device, and the transformation function is a frequency response curve of the second device with respect to audio data; or

the first training dataset is an image dataset, the second device is an image processing device, and the transformation function is a processing function of the second device with respect to image data.

4. The method according to claim 1, wherein performing dynamic quantization on the second model on the first device to obtain an optimized model deployable to the second device comprises:

quantizing each of a plurality of layers of the second model to generate a plurality of quantized layers;

calculating a difference between outputs of each of the plurality of layers and its corresponding quantized layer with respect to the same input to generate a set of output differences; and

replacing, when hardware resources on the second device are insufficient for all layers of the second model, one or more layers corresponding to one or more small output differences in the set of output differences with corresponding quantized layers to obtain the optimized model.

5. The method according to claim 1, further comprising:

converting a model file of the second model or the optimized model into an operator list, wherein the model file comprises a computation graph and a weight set, and the operator list comprises an operator position matrix, an operator size matrix, an operator weight matrix, an operator bias matrix, and an operator scale matrix; and

parsing the operator list in a traversal manner to extract a parameter set for each operator to generate a parameter list, wherein the parameter set comprises a weight, a bias, and a scale of each parameter of the operator, and the parameter list is configured to be written into the second device to perform model computations.

6. The method according to claim 5, further comprising:

for two or more parameters in the parameter list that have the same size, calculating a similarity between the two or more parameters; and

when the similarity is greater than a predetermined threshold, retaining, in the parameter list, only a parameter value of one parameter among the two or more parameters and positions of parameters among the two or more parameters.

7. A model optimization method executed on a second device, comprising:

deploying an optimized model on the second device, wherein the optimized model is obtained based on model optimization performed on a first device;

acquiring system memory and a system processing capability of the second device in real time prior to invoking the optimized model;

configuring layers and parameters of the optimized model based at least on the system memory and the system processing capability to generate an invoked model; and

executing the invoked model by the second device.

8. The method according to claim 7, wherein configuring layers and parameters of the optimized model based at least on the system memory and the system processing capability to generate an invoked model comprises:

determining a baseline model of the optimized model and a set of base layers serving as supplements to the baseline model;

calculating a count of configurable layers for each base layer based on the system memory, the system processing capability, and required memory and a required processing capability of each base layer in the set of base layers;

determining a plurality of base layers in the set of base layers with the count of configurable layers greater than zero as a set of candidate layers; and

selecting, based at least on the system memory and the system processing capability, one or more candidate layers from the set of candidate layers to supplement into the baseline model to generate the invoked model.

9. A computer-readable storage medium, which has computer-readable instructions stored thereon, wherein the computer-readable instructions, when executed by a processor, cause the processor to perform the method of either of claims 7 and 8.

10. A computer program product, which comprises computer-readable instructions, wherein the computer-readable instructions, when executed by a processor, cause the processor to perform the method of either of claims 7 and 8.

<u>100</u>

| | |
|---|---|
| Performing training on the first device using a first training dataset to obtain a first model | S102 |
| Transforming the first training dataset with a transformation function to obtain a transformed dataset, and generating a second training dataset based on the first training dataset and the transformed dataset | S104 |
| Training the first model on the first device using the second training dataset to obtain an adjusted first model | S106 |
| Performing performance tests on the first model and the adjusted first model using a test dataset to respectively obtain a first and a second performance metric, and calculating a performance metric difference between the two | S108 |
| Adjusting the second training dataset based on the performance metric difference to generate an adjusted second training dataset, which is configured to train the adjusted first model to obtain a second model | S110 |
| Performing dynamic quantization on the second model on the first device to obtain an optimized model deployable to the second device | S112 |

FIG. 1

**FIG. 2**

300

FIG. 3

400

| Optimized model | → | Operator list conversion 402 | → | Parameter parsing 404 |

| Parameter list output 408 | ← | Parameter fusion 406 |

| Hardware information 410 |

**FIG. 4**

Computation graph 502

| Operator list conversion 504 |

Operator list 506

| $Op1$ | $L$ | $Z$ | |
| | $W$ | $B$ | $S$ |

| $Op2$ | $L$ | $Z$ | |
| | $W$ | $B$ | $S$ |

| $OpQ$ | $L$ | $Z$ | |
| | $W$ | $B$ | $S$ |

**FIG. 5**

600

Start

602 OpList= Null? — Yes → End parsing 618

No

Parsing OpList 604

Storing Op parameters 616 ← Yes — Op_count=0 ? 606

No

Acquiring Op position 608

Acquiring weight size 610_1 | Acquiring bias size 610_2 | Acquiring scale size 610_3

Parsing weight 612_1 | Parsing bias 612_2 | Parsing scale 612_3

Op_count= Op_count-1 614

**FIG.·6**

| Weight | Data_type | Op_name | Op_count |
|--------|-----------|---------|----------|
| | Weight_size | DATA | |

| Bias | Data_type | Op_name | Op_count |
|------|-----------|---------|----------|
| | Bias_size | DATA | |

| Scale | Data_type | Op_name | Op_count |
|-------|-----------|---------|----------|
| | Scale_size | DATA | |

FIG.·7

800

Deploying an optimized model on the second device, where the optimized model is obtained based on model optimization performed on a first device — S802

Acquiring system memory and a system processing capability of the second device in real time prior to invoking the optimized model — S804

Configuring layers and parameters of the optimized model based at least on the system memory and the system processing capability to generate an invoked model — S806

Executing the invoked model by the second device — S808

# FIG.·8

## EUROPEAN SEARCH REPORT

| | Application Number |
|---|---|
| | EP 25 18 9658 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MALTE J RASCH ET AL: "Hardware-aware training for large-scale and diverse deep learning inference workloads using in-memory computing-based accelerators", ARXIV.ORG, CORNELL UNIVERSITY LIBRARY, 201 OLIN LIBRARY CORNELL UNIVERSITY ITHACA, NY 14853, 16 February 2023 (2023-02-16), XP091440029, * abstract * * page 3, paragraph 3 - page 4, paragraph 2; figures 1, 2 * * Sections 2 and 3 * * page 22 - page 24 * ----- | 1-10 | INV. G06N3/0495 |
| A | Chowdary Manduva Vinay: "Model Compression Techniques for Seamless Cloud-to-Edge AI Development", International Journal of Scientific Research and Management (IJSRM), 6 June 2023 (2023-06-06), pages 969-986, XP093334184, DOI: https://doi.org/10.18535/ Retrieved from the Internet: URL:https://ijsrm.net/index.php/ijsrm/article/view/4624 [retrieved on 2025-11-10] * abstract * * Section III, Section IV.1 * ----- -/-- | 1-10 | |

| TECHNICAL FIELDS SEARCHED (IPC) |
|---|
| G06N |

The present search report has been drawn up for all claims

| Place of search | Date of completion of the search | Examiner |
|---|---|---|
| The Hague | 10 November 2025 | Malatesta, Lori |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 18 9658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG YIFEI ET AL: "LaCo: Large Language Model Pruning via Layer Collapse", FINDINGS OF THE ASSOCIATION FOR COMPUTATIONAL LINGUISTICS: EMNLP 2024, 17 February 2024 (2024-02-17), pages 6401-6417, XP093333889, DOI: 10.18653/v1/2024.findings-emnlp.372 * abstract * * Section 2; figure 1 * | 1-10 | |

TECHNICAL FIELDS SEARCHED (IPC)

The present search report has been drawn up for all claims

| Place of search | Date of completion of the search | Examiner |
|---|---|---|
| The Hague | 10 November 2025 | Malatesta, Lori |